(19) Europäisches Patentamt
European Patent Office
Office européen des brevets

(11) **EP 4 472 226 B1**

(12) **EUROPEAN PATENT SPECIFICATION**

(45) Date of publication and mention
of the grant of the patent:
**03.06.2026 Bulletin 2026/23**

(21) Application number: **24382617.9**

(22) Date of filing: **07.06.2024**

(51) International Patent Classification (IPC):
**H04N 25/47** *(2023.01)*     **H04N 25/60** *(2023.01)*

(52) Cooperative Patent Classification (CPC):
**H04N 25/47; H04N 25/60**

(54) **AN EVENT FILTER FOR AN EVENT BASED IMAGING SENSOR, A METHOD OF EVENT FILTERING AND A COMPUTER PROGRAM**

**EREIGNISFILTER FÜR EINEN EREIGNISBASIERTEN BILDGEBUNGSSENSOR, VERFAHREN ZUR EREIGNISFILTERUNG UND COMPUTERPROGRAMM**

**FILTRE D'ÉVÉNEMENT POUR UN CAPTEUR D'IMAGERIE BASÉ SUR UN ÉVÉNEMENT, PROCÉDÉ DE FILTRAGE D'ÉVÉNEMENT ET PROGRAMME INFORMATIQUE**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**04.12.2024 Bulletin 2024/49**

(73) Proprietor: **Ikerlan, S. Coop**
**20500 Arrasate-Mondragón, Gipuzkoa (ES)**

(72) Inventors:
• **DÁVILA, Maria Angélica**
**20500 ARRASATE-MONDRAGÓN (GIPUZKOA) (ES)**
• **ITURBE, Xabier**
**20500 ARRASATE-MONDRAGÓN (GIPUZKOA) (ES)**
• **VALERDI, Juan Luis**
**20500 ARRASATE-MONDRAGÓN (GIPUZKOA) (ES)**
• **FERNANDEZ, Ander**
**20500 ARRASATE-MONDRAGÓN (GIPUZKOA) (ES)**

(74) Representative: **D Young & Co LLP**
**3 Noble Street**
**London EC2V 7BQ (GB)**

(56) References cited:
**US-A1- 2023 085 974**

• **FENG BOHAN ET AL: "An Efficient Space Spatiotemporal Noise Filter for Dynamic Vision Sensor", 2021 IEEE 14TH INTERNATIONAL CONFERENCE ON ASIC (ASICON), IEEE, 26 October 2021 (2021-10-26), pages 1 - 4, XP034035205, DOI: 10.1109/ ASICON52560.2021.9620254**
• **PEREZ-CUTINO M A ET AL: "Event-based human intrusion detection in UAS using Deep Learning", 2021 INTERNATIONAL CONFERENCE ON UNMANNED AIRCRAFT SYSTEMS (ICUAS), IEEE, 15 June 2021 (2021-06-15), pages 91 - 100, XP033942410, DOI: 10.1109/ ICUAS51884.2021.9476677**
• **HU RUI ET AL: "A Less Noisy Time Surface for Event-based Visual Odometry", 2021 IEEE INTERNATIONAL CONFERENCE ON UNMANNED SYSTEMS (ICUS), IEEE, 15 October 2021 (2021-10-15), pages 299 - 304, XP034055218, DOI: 10.1109/ ICUS52573.2021.9641205**

**Description**

**BACKGROUND**

**Field of the Disclosure**

The present disclosure relates to an event filter for an event based imaging sensor, a method of event filtering and a computer program.

**Description of the Related Art**

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

An event-based sensor, such as a Dynamic Vision Sensor (DVS), is a type of imaging sensor that responds to changes in brightness. A pixel of an event-based sensor operates independently and asynchronously and reports changes in brightness as they occur. As an example, each pixel of an event-based imaging sensor may compare a current brightness level to a stored reference value. Then, if the change in brightness between the current brightness level and the stored reference value exceeds a given threshold, the pixel will report an event. When the event is reported, the pixel may reset its reference value to the new brightness.

Therefore, an event-based sensor, such as the DVS, is an asynchronous sensor with high temporal resolution and a streaming nature.

Events generated by event-based sensors introduce a novel representation of visual data and change the way traditional vision processing is done through frames. The highly sparse data, asynchronous generation, and stream nature of the data from event-based sensors require the development of new algorithms, methods, and hardware to process this data and extract information.

It will be appreciated that the output stream data from an event-based sensor includes not only signal events but also a combination of noise events, referred to as background activity (BA), where the sensor is activated in absence of changes in the scene, and also uncertainty (jitter) in the timing of event response. The BA depends on illumination conditions; for high photocurrent (high illumination), noise events generate periodic leak events. Conversely, in low photocurrent conditions, the noise rate increases significantly and depends on the magnitude of the current.

Background activity is mixed with events produced by moving objects. Accordingly, this background activity can lead to unnecessary bandwidth consumption and increased workload, potentially saturating a communication channel from the event-based sensor. Furthermore, this background activity can potentially decrease power efficiency and processing accuracy. Indeed, managing the event rate is critical to avoid saturation of the sensor.

The aforementioned problems are exacerbated with increased resolution of event-based sensors, which lead to an even higher event rate (comprising both increased noise events and increased signal events).

Accordingly, It is an aim of the present disclosure to address these issues.

Prior art includes:
FENG BOHAN ET AL: "An Efficient Space Spatiotemporal Noise Filter For Dynamic Vision Sensor", 2021 IEEE 14th International Conference on ASIC (ASICON), IEE, 26 October 2021, pages 1 - 4, which discloses an efficient space spatiotemporal noise filter. Firstly, the Manhattan distance and adaptive weight are utilized to describe the spatiotemporal correlation of events. Secondly, the experiment was evaluated by normalized variance, which is an evaluation indicator and the noise event follows a Poisson distribution. Finally, the experimental results show that the efficient space spatiotemporal noise filter can effectively remove noise events and retain real events compared with other methods.

PEREZ-CUTINO M A ET AL: "Event-based human intrusion detection in UAS using Deep Learning," 2021 International Conference on unmanned aircraft systems (ICUAS), IEEE, 15 June 2021, pages 91 to 100, which discloses an event-by-event processing scheme for detecting human intrusion using unmanned aerial systems. It includes 1) one method for detecting clusters of events caused by moving objects in static background and 2) one method based on Convolutional Neural Networks to compute the probability that a cluster corresponds to a person.

HU RUI ET AL: "A Less Noisy Time Surface for Event-based Visual Odometry", 2021 IEEE International Conference on unmanned systems (ICUS), IEEE, 15 October 2021, pages 299-304, which discloses a less noisy time surface approach to reserve more environmental details under noisy conditions. It is realized with three additional efficient operations on the local memory time surface, as well as a weighted combination of positive and negative time surface map. Three operations include considering less weighted neighbour information, treating events that do not occur in groups and events of large time intervals as noisy events.

## SUMMARY

A brief summary about the present disclosure is provided hereinafter to provide a basic understanding related to certain aspects of the present disclosure.

The invention is defined by the appended claims.

In accordance with aspects of the disclosure, events from an event-based imaging sensor can be efficiently filtered to remove significant amounts of the noise events while preserving high levels of signal events. This supresses unnecessary bandwidth consumption and workload consumed by noise events resulting in improved power efficiency and accuracy of an imaging device comprising an event-based sensor.

The present disclosure is not particularly limited to these advantageous technical effects. Other technical effects will become apparent for the skilled person when reading the disclosure.

Unless explicitly indicated as "embodiment(s) of the claimed invention", any embodiment example, aspect or implementation in the description may include some but not all features as literally defined in the claims and are present for illustration purposes only.

## BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

Figure 1 illustrates a functional diagram of a Dynamic Vision Sensor pixel;

Figure 2 illustrates an example event filter in accordance with embodiments of the disclosure;

Figure 3 illustrates a timestamp layer and a potential layer of an event filter in accordance with embodiments of the disclosure;

Figure 4 illustrates an example of an event filter in accordance with embodiments of the disclosure;

Figure 5 illustrates an example neighbour weight matrix in accordance with embodiments of the disclosure;

Figure 6 illustrates an example of the behaviour of the potential in accordance with embodiments of the disclosure;

Figure 7 illustrates an example of parameter optimization of the event filter in accordance with embodiments of the disclosure;

Figures 8A and 8B illustrate a comparison of the event filter according to embodiments of the disclosure and three hardware-implemented filters;

Figure 9A and 9B illustrate an example method of event filtering in accordance with embodiments of the disclosure;

Figure 10 illustrates filter blocks for a hardware implementation of the event filter in accordance with embodiments of the disclosure;

Figure 11 illustrates an example imaging system comprising an event filter in accordance with embodiments of the disclosure.

## DESCRIPTION OF THE EMBODIMENTS:

Referring now to the drawings, wherein like reference numerals designate identical or corresponding parts throughout the several views.

As explained in the Background, events generated by event-based sensors introduce a novel representation of visual data and change the way traditional vision processing is done through frames.

That is, an event-based sensor, such as a Dynamic Vision Sensor (DVS), is an imaging sensor that responds to changes in brightness. A pixel of the event-based sensor operates independently and asynchronously and reports changes in brightness as they occur. As an example, each pixel of the event-based imaging sensor may compare a current brightness level to a stored reference value. Then, if the change in brightness between the current brightness level and the stored reference value exceeds a given threshold, the pixel will report an event. When the event is reported, the pixel will reset its reference value to the new brightness.

Therefore, in some examples of the present disclosure, an event is a change of brightness with an absolute magnitude of the change greater than a threshold value.

The output stream data from an event-based sensor, such as a DVS sensor, includes not only signal events but also a combination of noise events, referred to as background activity (BA). That is, event data from a DVS sensor, combined with noise triggered from various sources within the pixel circuit, produces useful information. This places stress on communication channels and processing stages.

Furthermore, new generations of event-based sensors have higher resolutions (ranging from 240 x 240 to 1280 x 720 or even higher) leading to a higher event rate (combined noise and signal).

Indeed, event-based sensors exhibit sensitivity to noise conditions, much like other image sensors. The interaction with photons, the configuration of the contrast circuit, and thermal effects result in random activity.

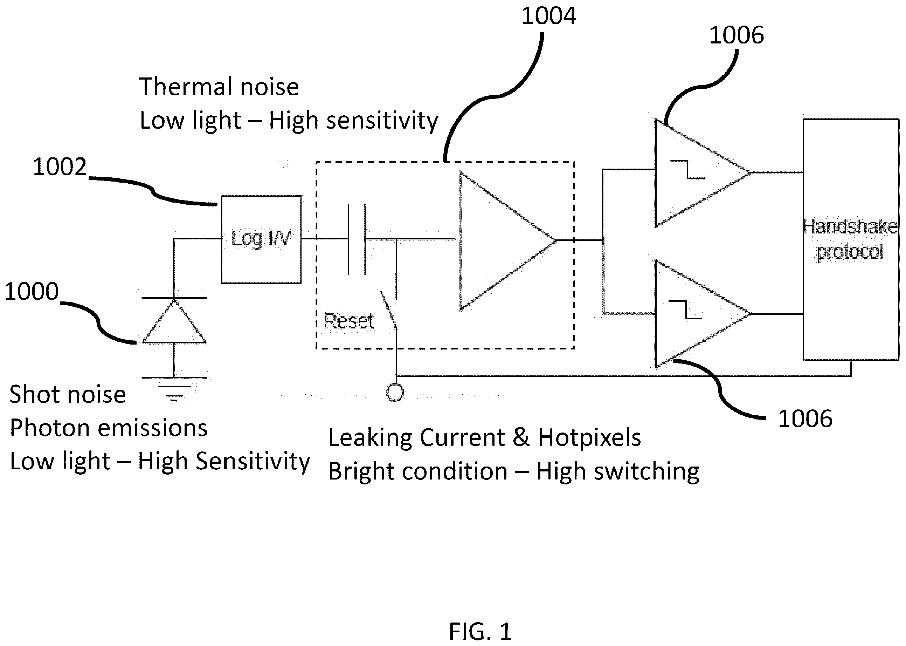

Consider, now, Figure 1 of the present disclosure. Figure 1 of the present disclosure illustrates a functional diagram of a DVS pixel.

The DVS pixel shown in this example comprises a photodiode 1000. As light falls on the photodiode 1000, a current is generated at its output. The logarithmic I/V 1002 is provided such that as the photodiode 1000 receives more light, the voltage output increases logarithmically.

The self-timed switched capacitor differentiator 1004 then amplifies any change in the output voltage which is then compared using the comparators 1006.

Accordingly, the DVS pixel will generate an event (output) when a change in brightness is detected that exceeds a reference value.

Even in scenarios where no activity is present in a scene, the DVS camera generates events, known as background activity noise. This noise is primarily caused by photon and electron shot noise in dark settings and by leakage in the reset transistor for brighter settings. Additionally, thermal noise induces random pixels, especially in environments with low illumination, and a low bias (high sensitivity) in the sensor can trigger events.

The different sources of noise in the DVS sensor as illustrated in Figure 1 of the present disclosure. Furthermore, light sensitivity of the noise sources is also illustrated in Figure 1.

For the DVS sensor, noise can be controlled with the bias in the pixel. The bias influences the sensitivity of the pixel, and properly tuning the sensor bias can enhance data quality. For example, a low bias improves sensor sensitivity to contrast changes but increases background activity. Conversely, a high bias reduces the number of events but increases pixel latency, which is not ideal in environments with fast movements. Therefore, bias tuning depends on scene conditions.

However, given that event-based sensors have a wide dynamic range, static control of bias in the sensor, and the high latency associated with changing this parameter, can limit reconfiguration. This makes it very difficult to supress noise from an event-based sensor through reconfiguration of the sensor. Indeed, while some DVS sensors include modules for controlling event rate generation, such as event dropping and sensitivity adjustments through bias parameters, noise events are still present.

Some DVS cameras provide various internal configuration alternatives, such as low and high pass filters for controlling the cut-off frequency at the pixel level. The low pass filter adapts the sensor for scenes with slow motion, while the high pass filter is set for fast motion and flickering. In addition to filters, the refractory period can be configured, allowing pixels to retain values and remain insensitive to contrast changes during the refractory period. However, these configurations affect both signal sensitivity and background noise, potentially reducing the range where the sensor could be effectively utilized.

Currently the noise in DVS is not fully characterized, posing further challenges for signal extraction and processing.

Certain filters have been used for noise reduction in events detected by event-based sensors.

Proposed algorithms for event filtering filter focus on noise reduction while addressing hardware constraints. While these algorithms succeed to a certain degree in improving the output signal, their limitations become apparent with scene dependency and low scalability.

One of the earliest and widely adopted proposals is the Background Activity Filter (BAF), serving as the foundation for filter design (T. Delbruck et al., "Frame-free dynamic digital vision", in Proceedings of Intl. Symp. On Secure-Life Electronics, Advanced Electronics for Quality Life and Society, vol. 1. Citeseer, 2008, pp. 21-26). With low latency, minimal operations, and constrained memory resources, BAF achieves relatively effective noise and signal classification. The BAF filter passes the current input event if the time since the most recent event occurring for one of the nearest neighbour pixels is less than a threshold. However, BAF filter passes the signal with poorer noise reduction than is often required for a given situation.

Memory resources pose a significant challenge addressed by other filter designs. For instance, the Khodamoradi's proposal, known as an O(n) filter, tackles the challenge of reducing memory resources, but its design is tailored towards low-resolution DVS cameras (A. Khodamoradi and R. Kastner "o(n) o(n)-space spatiotemporal filter for reducing noise in neuromorphic vision sensors," IEEE Transactions on Emerging Topics in Computing, vol. 9, no. 1, pp 15-23 2018). Scaling to modern high-resolution DVS cameras can render the filter almost insensitive to threshold values, resulting in a reduced memory distribution that hampers neighbourhood correlation. Consequently, real events (signal) may be misclassified as noise. In other words, the O(n) filter removes most of the noise but also eliminates a significant portion of the signal in some applications.

Advancements in filtering also include the use of neural networks in both hardware and software-oriented works. In hardware, a multilayer perceptron neural network is designed with lightweight computation, driven by local event time surfaces, showing superior signal accuracy compared to previous proposals. The hardware implementation demonstrates resource consumption of less than 1 memory per pixel, outperforming the BAF filter by a factor of 2. In software, computationally demanding algorithms, such as Graph Neural Networks with transformers (GNNs-transformers), and Convolutional Neural Networks, appear to capture the high variability and tuning required by event-based cameras.

Filter strategies based on spiking neural networks, SNNs, have also been proposed (V. Padala, A. Basu, and G. Orchard, "A noise filtering algorithm for event-based asynchronous change detection image sensors on truenorth and its implementation on truenorth," Frontiers in neuroscience, vol. 12 p. 118, 2018). Typically, filter strategies based on SNNs result in high pixel interaction, preserving the signal but introducing redundancy, with more events at the output than the input. This synthetic event generation and the redundancy introduced by the SNN results in increased workload, potentially saturating the communication channel and decreasing the power efficiency and processing accuracy.

In summary, proposed event-based camera filters require a balance between adaptability and computational complexity for optimal performance and low latency. These objectives are often perceived as opposing forces, ranging from complex neural networks for adaptability to simpler strategies like spatiotemporal correlations (such as the BAF filter).

As such, an improved event filter is desired, which can be used to efficiently remove significant amounts of the noise events while preserving high levels of signal events arising from an event-based image sensor.

Accordingly, for at least these reasons, in addition to those reasons discussed in the background, an event filter for an event based imaging sensor, a method of event filtering and a computer program are provided in accordance with embodiments of the disclosure.

<Event Filter>

A filter designed to effectively process event streams from an event-based image sensor should embody three main concepts: first, the reduction of redundant events that could hide information; second, consideration of spatial correlation, assuming that meaningful events are spatially close and occur relatively simultaneously; and third, low latency, achievable near the sensor with dedicated hardware, ensuring low power consumption.

The event filter of the present disclosure is presented in accordance with these principles.

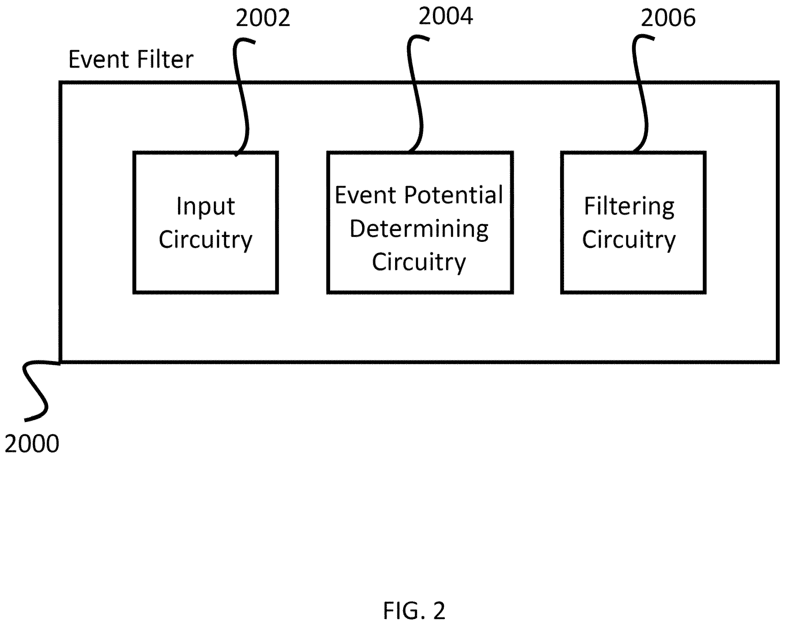

Consider, now, Figure 2 of the present disclosure. Figure 2 of the present disclosure illustrates an event filter for an event based image sensor in accordance with embodiments of the claimed invention.

The event filter 2000 illustrated in Figure 2 of the present disclosure comprises input circuitry 2002, event potential determining circuitry 2004 and filtering circuitry 2006.

The input circuitry 2002 is configured to receive an indication of a pixel position associated with a current event detected by the event based imaging sensor.

The event potential determining circuitry 2004 is configured to determine an event potential associated with the current event. In particular, the event potential determining circuitry is configured to determine the event potential for the current event based on combining contributions associated with pixels in a local region of pixels around the pixel position of the current event, where a given contribution associated with a given pixel in the local region is dependent on a time decay factor which causes the given contribution to decrease with increasing time difference between a time of detection of a previous event for the given pixel and a time of detection of the current event.

Finally, the filtering circuitry 2006 is configured to determine whether to pass the current event based on the event potential.

In this way, the event filter 2000 receives an indication of an event from an event-based imaging sensor and processes that event to determine an event potential (a value) for the event which can be used in order to determine whether or not to pass the event. If the event is not passed, then it is filtered out by the event filter 2000. On the other hand, if the event is passed, then it is not filtered out by the event filter 2000. This enables the event filter to filter out certain events (such as noise events) while passing other events (signal events).

Indeed, according to the present disclosure, the potential for a current event received from the event-based imaging sensor is determined based on a spatial factor (the contribution associated with the pixels in the local region) which is dependent on a time decay factor, thus causing the given contribution for a given pixel in the local region to decrease with increasing time difference between a time of detection of a previous event for the given pixel and a time of detection of the current event. This means that given pixels in the local region which have detected a previous event closer in time to the current event will contribute more strongly to the determination of the event potential for the current event.

In other words, a temporal factor to the determination of the event potential is introduced, which prioritizes more recent events over older events within the local region. On the other hand, contributions from multiple neighbouring pixels are combined, which tends to improve noise reduction compared to a filter such as BAF which allows an event to pass the filter if there is just one surrounding pixel which has encountered a recent event. This improves the effectiveness of the filter.

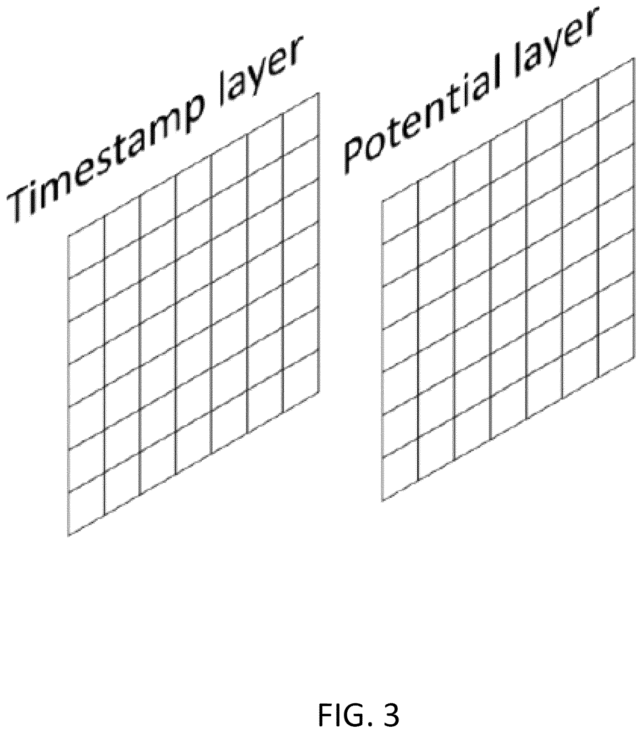

Consider, now Figure 3 of the present disclosure. Figure 3 of the present disclosure illustrates a timestamp layer and a potential layer of an event filter in accordance with embodiments of the disclosure.

In this specific example, the timestamp layer and the potential layer are each illustrated as a 7x7 array, with each cell of the timestamp layer and potential layer corresponding to a pixel of the event-based image sensor.

However, the present disclosure is not particularly limited to this specific example and the timestamp layer and the potential layer may be a different size than shown (e.g. smaller or bigger than the example illustrated). Indeed, the size of the timestamp layer and the potential layer may be much bigger than the example shown in Figure 3.

The timestamp layer can be used in order to store the timestamp of the most recently occurring event for each pixel, while the potential layer can be used to store the potential which has been calculated in a previous cycle for each pixel.

N previous events (where N is an integer) in a local region around a current event can then be used in order to support the determination of the event potential for a current event. Indeed, since the timestamp of the previous events is stored in the timestamp layer, the given contribution of the previous event to the determination of the potential of the current event can be made dependent on the time decay factor, causing the contribution to decrease with increasing time difference between a time of detection for the previous event for the given pixel and the time of detection of the current event.

This temporal factor to the determination of the event potential for a current event helps to control activity of hot pixels and reduce event redundancy, thus providing an improved event filter which can more efficiently remove noise events while preserving high levels of signal events.

In examples, the timestamp layer described with reference to Figure 3 of the present disclosure may be implemented as a time stamp storage (or memory) either internal to or external to the event filter. The time stamp memory may store timestamps representing the most recent event for respective pixel positions.

It will be appreciated that the present disclosure is not particularly limited to the specific configuration of the event filter as described with reference to Figure 2 of the present disclosure. In examples, the event filter 2000 may be provided as part of a system (described in more detail later). In examples, the functionality of the event filter 2000 may be performed in a distributed manner using a number of different processing devices.

While the event filter 2000 is described as comprising three different circuits (the input circuitry 2002, the event potential determining circuitry 2004 and the filtering circuitry 2006) it will be appreciated that the present disclosure is not particularly limited in this respect. In examples, the different circuits described with reference to Figure 2 may be combined in a single circuitry. Alternatively, one or more additional circuits may also be provided.

In examples, the circuitry 2002, 2004 and 2006 may be a microprocessor carrying out computer instructions. In examples, the circuitry 2002, 2004 and 2006 may be an Application Specific Integrated Circuit. The computer instructions may be stored on a storage medium which maybe a magnetically readable medium, optically readable medium or solid state type circuitry. The storage medium may be integrated into the event filter or may be separate to the event filter 2000 and connected thereto using either a wired or wireless connection. The computer instructions may be embodied as computer software that contains computer readable code which, when loaded onto the processor circuitry, configures the processor circuitry to perform a method according to embodiments of the disclosure. This will be described in more detail later.

In examples, the input circuitry may be configured to receive the indication of pixel position associated with the event based imaging sensor using any suitable wired or wireless connection. The type of connection formed between the event-based imaging sensor and the event filter may vary depending on the specific situation to which the embodiments of the disclosure are applied.

In examples, the event filter may receive events from the event-based image sensor in a real time environment (i.e. as those events are generated by the event-based image sensor). In examples, the event filter may receive a stream of events from the event-based image sensor. Indeed, the efficiency of the event filter according to embodiments of the disclosure enables the event filter to perform with very low latency such that events can be filtered from the event based image sensor in a real time environment (i.e. as those events are received from the event-based image sensor). However, in examples, the event-filter may filter events which have previously been generated by an event-based image sensor (e.g. after those events have been stored in a storage unit (such as a buffer)).

According to an embodiment of the invention, the given contribution described with reference to Figure 2 of the present disclosure is further dependent on a factor corresponding to a previous event potential associated with the given pixel. In this way, the previous potential (determined for previous events) serves as a refractory period and preserves spatiotemporal components when filtering events. This further improves the effectiveness of the filter when filtering noise events.

A storage device (not shown) is included within the event filter. The storage device includes event potential storage circuitry configured to store an event potential which has been determined for an event detected by the event based imaging sensor in association with a pixel position. This enables the event potential which has been determined for a given (previous) event to be readily accessed when required for determining the event potential of any preceding event. In examples, the event potential storage circuitry is an example implementation of a potential layer as described with reference to Figure 3 of the present disclosure.

The event potential determining circuitry 2004 is configured to update event potentials stored in the event potential storage circuitry based on a second time decay factor which causes event potential associated with an event detected by the event based imaging sensor to decrease with increasing time difference between a time of detection of the event associated with that event potential and a current time.

In examples, the event potential determining circuitry 2004 may be configured to update the event potential stored in the event potential storage circuitry in association with a pixel position when a new event associated with that pixel position is detected by the event based imaging sensor. This provides an efficient way of maintaining the event potentials of past events, as the most recent event potential for a given pixel is stored in the event potential storage.

Further details of the event filter according to embodiments of the disclosure will now be described with reference to an example implementation of the event filter. It will be appreciated that while certain features of the disclosure are described with reference to this example implementation, the present disclosure is not particularly limited in this regard and these features may be applied, more generally, to an event filter such as that described with reference to Figure 2 of the present disclosure.

<Example Implementation>

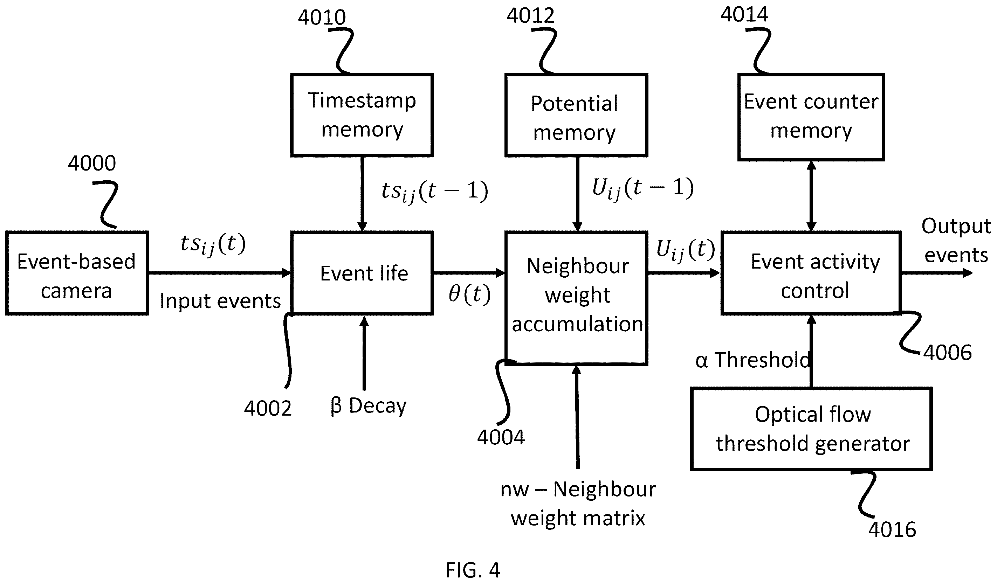

Consider, now, Figure 4 of the present disclosure. Figure 4 illustrates an example of an event filter in accordance with embodiments of the disclosure.

The event filter illustrated in Figure 4 of the present disclosure is an example implementation of an event filter 2000 as described with reference to Figure 2 of the present disclosure.

In this example, an event-based camera 4000 (being an imaging device comprising an event-based sensor) is used in order to image a scene.

Input events are received from the event-based camera by the event life unit 4002 of the event filter. In examples, Each event contains information about the pixel position *(i, j)*, temporal information *t* indicating when the event was generated, and the polarity *p*. In examples, an event is denoted as a quadruple *e = (i, j, t, p)*. In examples, the temporal information *t* may be received from the event-based image sensor. In examples, the temporal information *t* may be determined (or otherwise generated) by the event-based filter (e.g. based upon a time at which a given event in the stream of events is received from the event-based image sensor).

In examples, an event from an event-based image sensor may be associated only with the pixel position (i, j) and temporal information t; the event filter of the present disclosure is independent of polarity of the event. This will be described in more detail later.

Output events (being events passed by the filter) may be passed to any suitable processing device for further processing of the output of the event-based image sensor.

The event life unit 4002 is designed to determine the temporal activity of each pixel. This event life unit takes a timestamp matrix (from the timestamp memory 4010), containing the latest temporal information for each event, as input. Leveraging this information, the filter estimates the lifespan of events based on the current timestamp of the input event and the preceding one. This produces a proportional weighted value of the event, prioritizing more recent events over older ones within the specific neighbourhood.

In examples, each *(i,j)* event in the *nxm* neighbourhood is assigned a weight value calculated using Equation (1):

$$\theta_{ij}(t) = \frac{1}{\beta}^{\Delta t_{ij}} \tag{1}$$

$$\Delta t_{ij} = ts(t) - ts_{ij}(t-1)$$

Here, $\Delta t_{ij}$ represents the difference between the previous and current timestamps *ts*. The $1/\beta$ value, in the range (0, 1], is referred to as a decay parameter adjusting the lifespan of events. Lower $1/\beta$ can make the potential increase faster in subsequent stages, firing event generation more quickly. This mechanism helps to control hot pixels activity and reduce event redundancy.

Therefore, according to embodiments of the disclosure the event potential determining circuitry is configured to determine the event potential for the current event based on combining contributions associated with pixels in a local region of pixels around the pixel position of the current event, where a given contribution associated with a given pixel in the local region is dependent on a time decay factor which causes the given contribution to decrease with increasing time difference between a time of detection of a previous event for the given pixel and a time of detection of the current event.

In this example implementation, the $\theta_{ij}(t)$ feeds into the next processing stage (the neighbour weight accumulation 4004), where a matrix of neighbourhood weights, $n\omega$, is used to balance the potential of whether to allow the current event to pass or not. In this example, the neighbour weights depend on a matrix with an odd edge size, where the sum of all values equals 1, and the centre value is equivalent to 2 times the edges, providing relevance to the current event.

In examples, the neighbour weights matrix can be defined with a 3×3 dimension. However, the present disclosure is not particularly limited in this respect. For example, the neighbour weights matrix can be defined with a much higher dimension than this.

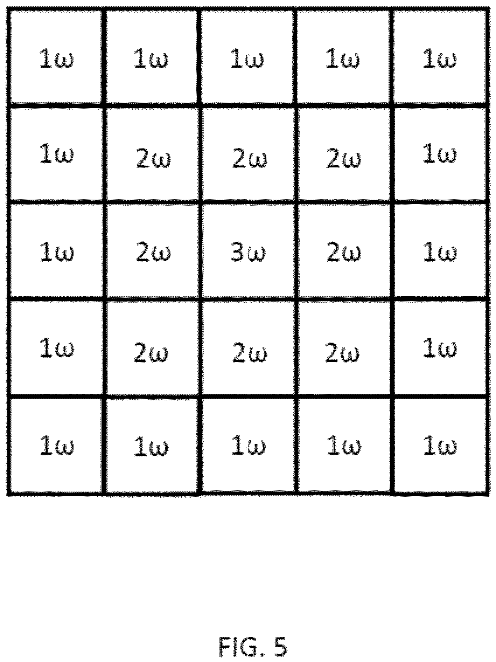

Consider, for example, the example of Figure 5 of the present disclosure. Figure 5 of the present disclosure illustrates an example neighbour weight matrix in accordance with embodiments of the disclosure. The example neighbour weight matrix of Figure 5 is a matrix of 5x5 dimension, where ω is a value calculated in accordance with Equation 3 of the present disclosure. The weight assigned at the centre of the matrix is 3ω, with the weight assigned on the outside edge of the matrix having a value of ω. On the other hand, the cells of the matrix between the edge and the centre have a value of 2w.

Therefore, the pixels in the local region can be assigned a different weight depending on their proximity to the current event (with the matrix being centred on the current event).

In this example implementation, to determine the $\omega$ value, the following recursive equation can be employed, where $n$ represents the side size of the neighbourhood $n \times n$:

$$f(n,i) = \begin{cases} f(n-2, i+1) + i*(n^2 - (n-2)^2), & i < n \\ i, & n = 1 \end{cases}$$

$$(2)$$

$$\omega = f(n, 1) \qquad\qquad (3)$$

Thus, the matrix $n\omega$ contains the weight of each event.

Accordingly, in this example implementation, the pixels in the local region (the neighbourhood) provide a different contribution to the event potential depending on their proximity to the current event.

However, as explained this is only one such example of a neighbourhood weight matrix which can be applied in accordance with embodiments of the present disclosure. Hence, more generally according to embodiments of the disclosure, the event potential determining circuitry can be configured to weight a given contribution associated with a given pixel in the local region based on a distance between a pixel position of the given pixel and the pixel position associated with the current event.

Furthermore, this weight can be applied as to weight the given contribution associated with the given pixel with decreasing weight for increasing distance between the pixel position of the given pixel and the pixel position associated with the current event.

Such a weighting provides a (spatial) relevance to the current event to the contribution of the pixels in the local region, ensuring that those pixels closer in proximity to the current event within the local region contribute more strongly to the determination of the event potential of the current event. This spatial correlation factor with varying weights in the neighbourhood contributes to the reduction of high-frequency components in each pixel thus further suppressing noise events generated by the event-based image sensor.

In this example implementation, the event potential of the current event to be filtered U is calculated by combining the given contributions of the given pixels in the neighbourhood. Indeed, in this specific example implementation, the given potentials are combined by a summation of the given potentials which have been calculated:

$$U_{ij}(t) = \sum_{k=i-nn}^{i+nn} \sum_{l=j-nn}^{j+nn} \theta_{kl}(t) * nw_{kl} + \frac{1}{\gamma} * U_{kl}(t-1), \quad (4)$$

$$nn = (n-1)/2$$

The first factor in Equation (4) - namely, $\theta_{kl}(t) * n\omega_{kl}$ - represents the given contribution for a given pixel in the local region in accordance with embodiments of the disclosure. By virtue of Equation (1), this factor includes a temporal element and, by virtue of Equation (3), this factor also includes a spatial element. The contribution of the given pixel to the potential of the current event is thus regulated by both spatial and temporal relevance to the current event.

According to the invention, the given contribution is also dependent on a factor corresponding to a previous event potential associated with the given pixel - the second factor in Equation (4); namely, $\frac{1}{\gamma} * U_{kl}(t-1)$.

Accordingly, this potential represents the spatial component related to variations in motion within the neighbourhood, also reinforced by the preceding potential value. It serves as a refractory time of the potential, regulated by a $\gamma$ decay. Higher potential values correspond to increased contrast activity and velocity of components in the scene.

That is, the factor corresponding to the previous event potential depends on a second time decay factor which causes the previous event potential to decrease with increasing time difference between a time of detection of the previous event associated with the previous event potential and the time of detection of the current event.

Thus, according to embodiments of the disclosure, the given contribution for a given pixel can be based on a distance-dependent weighting factor and a previous potential associated with that given pixel regulated by a time-dependent decay, and the event potential can be determined by summating the given contribution for pixels across the local region.

Once the event potential has been determined for a given event, it can be used in order to determine whether or not to pass an event. Noise events should be filtered out by the event filter, while signal events should be passed by the event filter.

In examples, the determination as to whether or not to pass a given event may be based on a comparison of the event potential which has been determined with a threshold value (the $\alpha$ threshold in the example of Figure 4) . In examples, events with an event potential exceeding the threshold value may be passed by the event filter. In examples, events with an event potential less than the threshold value may not be passed by the event filter. In examples, the threshold value may be set in advance as a predetermined threshold value. In examples, the threshold value may be adapted during the processing of the stream of events from the event based image sensor. This enables the event filter dynamically adapt to changes in the input data from the event based image sensor.

Indeed, the final step involves regulating activity in the event activity control 4006. As the potential has higher values with increased velocity, it allows for the control of objects with similar velocities in the environment. Additionally, since event generation relies on neighbourhood reinforcement, spatial correlation aids in removing isolated noise events.

Specifically, in this example implementation, two additional modules 4014 and 4016 govern the adaptation of the filter parameters. The first of these is an event counter monitor 4014. The second of these is an optical flow threshold generator 4016. These modules can operate outside the main event pipeline and contribute to dynamically adjusting the filter parameters. As an example, the filter parameters which can be dynamically adapted include a rate of decay of the time decay factor (such as the $\beta$ parameter of Equation 1), a rate of decay of the second decay potential (such as the $\gamma$ parameter of Equation 4) and/or a value of the threshold value used for determining whether to pass an event (such as the $\alpha$ parameter of Figure 4). These filter parameters may be adapted based on one or more of an optical flow metric and/or a rate of events which have been passed by the event filter.

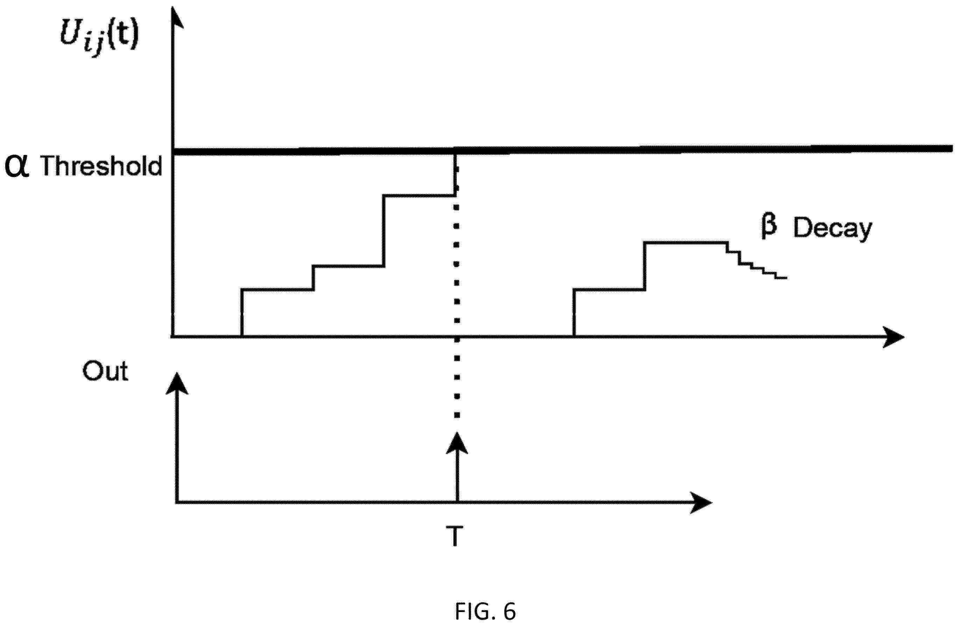

Figure 6 of the present disclosure illustrates an example of the behaviour of the potential in accordance with embodiments of the disclosure.

Initially, a potential for a given pixel may be low (less than a threshold value - the $\alpha$ threshold in this example). Then, the potential of this pixel may increase over time (as a change in brightness becomes more pronounced, for example) until such a time T that the potential for the pixel exceeds the threshold value. At this time, an event associated with that given pixel will be passed by the event filter. However, over time the value of the potential will then decay with time, such that the relevance of that previous potential to the determination of the potential of any new event decreases as the time between the event and any new event increases.

By changing the level of the threshold (the $\gamma$ threshold in this example) the type of event which is passed by the event filter can be adapted. A high threshold value will filter a large number of events, since many events may not reach the required threshold potential. As previously noted, higher potential values correspond to increased contrast activity and velocity of components in the scene. Therefore, a higher threshold value will filter out events corresponding to lower contrast activity and/or lower velocity of components of the scene.

The event counter monitor plays a role in maintaining a balance between the number of events removed and those passed through. This balance is important, considering that the design principle of this filter aims to preserve the signal while optimizing the signal-to-noise ratio. However, in scenarios where noise environments pose challenges for correlation and a substantial number of events are being removed, the counter mechanism can intervene to verify and potentially relax the filter configuration. On the other hand, an increase in the events being generated and passed by the filter will lead to increased bandwidth consumption and increased workload, potentially saturating a communication channel from the event-based sensor. Therefore, when a substantial number of events are being generated and passed by the filter, the counter mechanism can intervene to potentially tighten the filter configuration to keep the workload within set bounds for downstream components.

Regarding the optical flow threshold generator, it evaluates the velocity of objects within the scene. When the camera speed is elevated or there are pronounced independent motions, a higher number of events (with temporal and spatial correlation) is anticipated within a given time window. This information can be extracted by optical flow estimation in order to select an appropriate threshold for the filter.

In examples, there may be a direct relationship between optical flow estimation and the threshold for the filter. In examples, the relationship between the optical flow estimation and the threshold for the filter may be a non-linear relationship. In examples, the relationship between the optical flow estimation can be learnt through pre-configuration of the filter, where a number of test values are used for the threshold for images with different levels of optical flow. Indeed, in examples, any suitable trial and error method can be applied in order to learn the relationship between optical flow and threshold. For example, an iterative process, such as a parameter sweep, may be implemented in order to learn the relationship between optical flow and the threshold. In examples, a trained model - such as a machine learning model - can be used in order to set a value of the threshold based on a given optical flow. The trained model can be trained on training data comprising input data for scenes having different optical flow and corresponding values of the threshold for those images, to learn the preferred (or optimal) setting of the threshold for a given amount of optical flow.

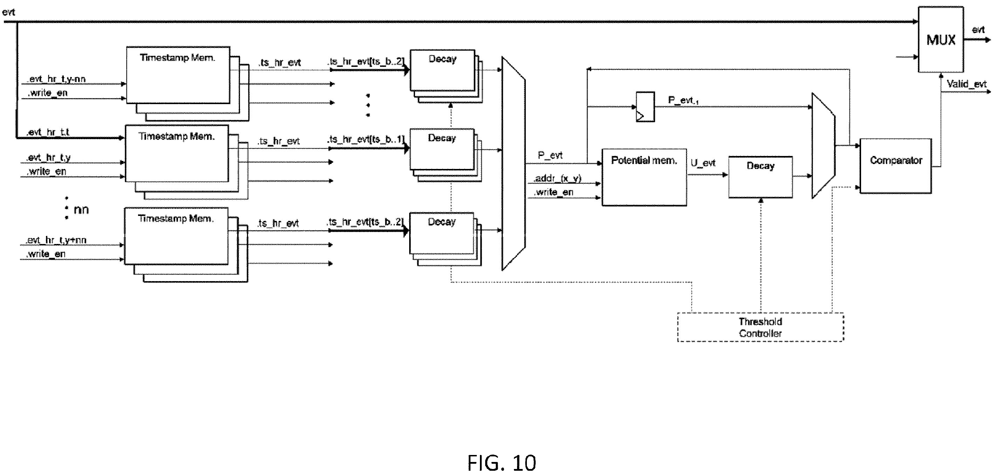

It will be noted that as the filter operates with event activity, the polarity is not used during the processing stages (the polarity defining whether an event is an increasing or decreasing event). Accordingly, to enable polarity to be used at a later stage of a processing pipeline (e.g. processing after events have been passed by the event filter) the polarity is stored when received and retained along the way (e.g. see the signal path bypassing the filter in the example of Figure 10 discussed below).

Accordingly, in embodiments of the disclosure, the filtering circuitry can be configured to adapt a filtering parameter based on at least one of an optical flow metric and a rate of events which have been passed by the filtering circuitry.

However, while a specific example implementation of the event filter has been described with reference to Figure 4 of the present disclosure, it will be appreciated that the present disclosure is not particularly limited in this regard.

<Velocity Dependency>

The inherent nature of event-based image sensor technology creates a strong dependence on velocity of objects in the scene. This dependency can be leveraged for filtering strategies and motivates a filter design that balances the signal-to-noise ratio based on the scene.

As a novel approach, a filter structure sensitive to scene velocity is introduced. This design can be used to filter objects of a certain velocity. For example, this filter design can be used to filter fast and slow objects, with the goal of removing the slowest objects. However, more generally, the value of the object velocity can be any value (and not only the slowest objects). In examples, the value of the object velocity to be removed can be defined by the user. In examples, the value of the object velocity to be removed can be adapted depending on the situation to which embodiments of the disclosure are applied. In example, the value of the object velocity to be removed can be defined by a user.

As previously explained, an optical flow threshold generator can be provided to evaluate the velocity of objects within the scene. When the camera speed is elevated or there are pronounced independent motions, a higher number of events (with temporal and spatial correlation) is anticipated within a given time window.

Adaption of the filter parameters in accordance with the optical flow achieves the optimization of the filter based on the scene velocity.

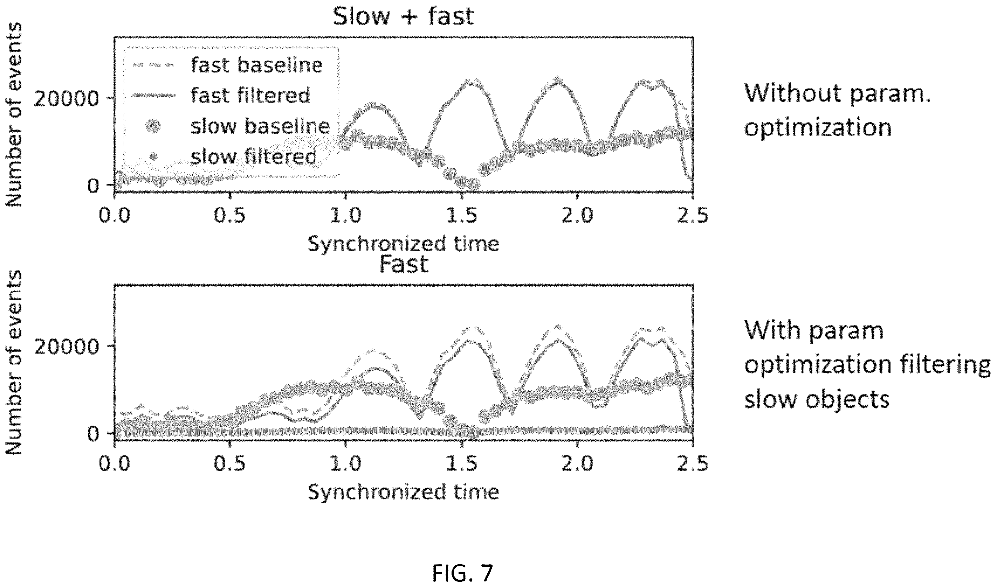

Consider, now, Figure 7 of the present disclosure. Figure 7 illustrates an example of parameter optimization of the event filter in accordance with embodiments of the disclosure.

In particular, this Figure shows the number of events over time both without parameter optimization and with parameter optimization. The baseline is a dataset of events without filtering. The filtered signal is the events which pass the event filter of the present disclosure. In Slow+fast imaging (upper) both signals preserves similar number of events with the same parametrization. In Fast (lower) the filter removes slowest events, while preserving the fastest events (corresponding to the fastest objects in the scene).

Through parameter optimization in this manner, the filter is able to achieve a remarkable 94% event suppression while preserving 67% of the fastest objects.

Therefore, parameter optimization of the event filter of the present disclosure in accordance with the velocity of objects within the scene enables the event filter to be tailored towards specific types of objects within the scene.

<Filter Comparison>

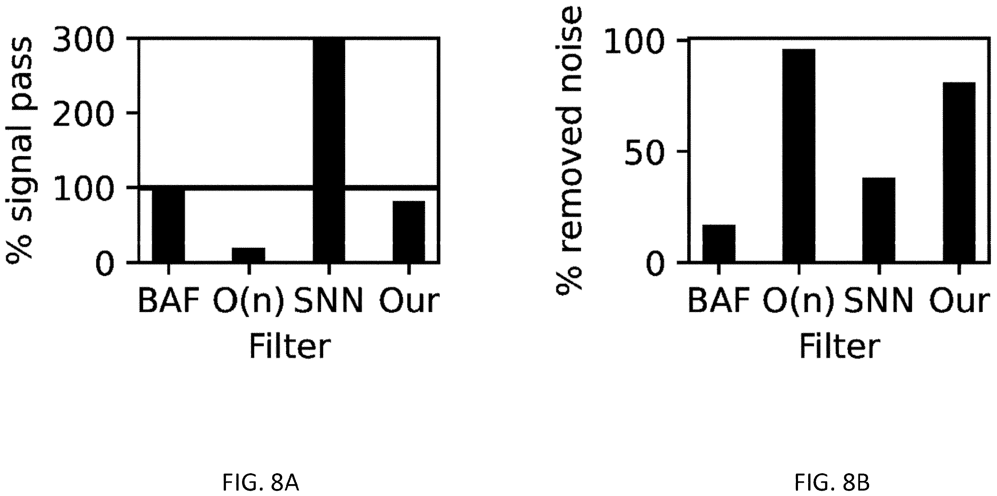

Consider, now, Figures 8A and 8B of the present disclosure. Figures 8A and 8B illustrate a comparison of the event filter according to embodiments of the disclosure and three hardware-implemented filters.

Figure 8A shows a percentage of signal passed for a BAF filter, an O(n) filter, a SNN and an event filter according to the present disclosure ("Our Filter" in the example of Figures 8A). That is, Figure 8A illustrates the percentage of signal that passes through each filter. Values higher than 100% indicate synthetic event generation while values significantly under 100% indicate that a large amount of the signal is being removed by the filter.

Figure 8B shows the percentage of noise that is removed by each of the BAF filter, the O(n) filter, the SNN and the filter according to the present disclosure ("Our Filter" in the example of Figure 8B). That is Figure 8B illustrates the percentage of the noise removed, where 100% removed signifies complete noise elimination (higher values are preferable for better performance).

While the BAF filter, the O(n) filter and the SNN succeed to a certain degree in improving the output signal, their limitations become apparent with scene dependency and low scalability, as illustrated in Figures 8A and 8B. Specifically, the BAF filter passes the signal with poor noise reduction, and the O(n) filter removes most of the noise but also eliminates a significant portion of the signal.

Furthermore, the SNN demonstrates a reasonable reduction in noise. However, the SNN results in high pixel interaction, preserving the signal but introducing redundancy, with more events at the output than the input. This synthetic event generation and the redundancy introduced by the SNN results in increased workload, potentially saturating the communication channel and decreasing the power efficiency and processing accuracy.

In contrast, the event filter according to the present disclosure ("Our Filter" in Figures 8A and 8B) exhibits strong noise suppression while retaining relevant signal information (achieving approximately 4x reduction in event rate).

In summary, a number of previously proposed filters require a balance between adaptability and computational complexity for optimal performance and low latency. These objectives are often perceived as opposing forces, ranging from complex neural networks for adaptability to simpler strategies like spatiotemporal correlations (such as the BAF filter). The event filter of the present disclosure achieves both objectives with structures that capture and adapt to scene activity, sense object velocity, and adapt filter parameters.

<Method>

Furthermore, a method of event filtering is provided by embodiments of the disclosure.

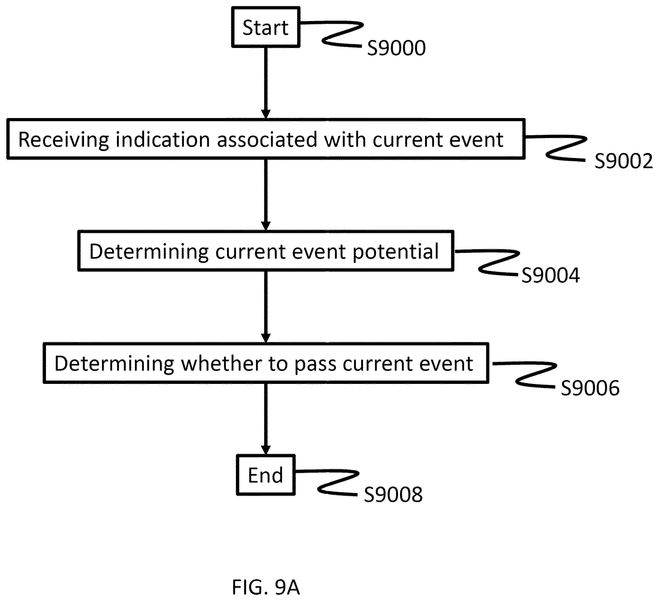

Figure 9A of the present disclosure illustrates an example method of event-filtering in accordance with embodiments according to the claimed invention. The method of Figure 9A of the present disclosure may, in some examples, be carried out by an event filter such as that described with reference to Figure 2 of the present disclosure.

The example method of event filtering illustrated in Figure 9A of the present disclosure starts at step S9000 and proceeds to step S9002.

In step S9002, the method comprises receiving an indication of a pixel position associated with a current event detected by the event based imaging sensor.

Then, in step S9004, the method comprises determining an event potential associated with the current event, wherein the event potential for the current event is determined based on combining contributions associated with pixels in a local region of pixels around the pixel position of the current event, where a given contribution associated with a given pixel in the local region is dependent on a time decay factor which causes the given contribution to decrease with increasing time difference between a time of detection of a previous event for the given pixel and a time of detection of the current event and wherein the given contribution is further dependent on a factor corresponding to a previous event potential associated with the given pixel, which depends on a second time decay factor.

In step S9006, the method comprises determining whether to pass the current event based on the event potential.

The method then proceeds to, and ends with, step S9008.

In this way, the events from an event-based imaging sensor can be filtered to remove significant amounts of the noise events while preserving high levels of signal events.

It will be appreciated that while an example method of event filtering is illustrated with reference to Figure 9A, the present disclosure is not particularly limited in this regard. For example, a number of additional method steps may also be included in addition to those method steps which are illustrated in Figure 9A. Furthermore, the order of the method steps is not necessarily limited to the order of those method steps illustrated in Figure 9A of the present disclosure. In particular, at least one or more of the method steps shown in Figure 9A may be performed in parallel. The method steps of Figure 9A may also be repeated any number of times as further indications of events detected by an event based imaging sensor are received.

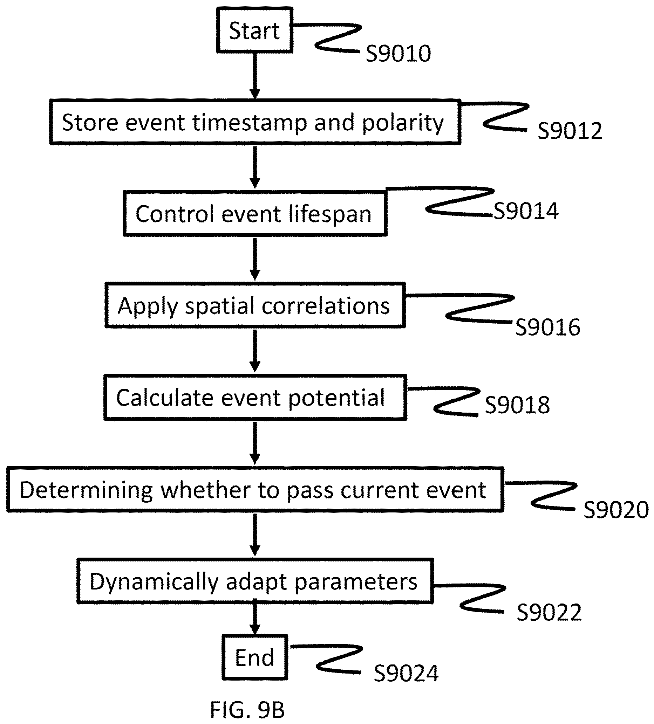

Consider, now, Figure 9B of the present disclosure. Figure 9B of the present disclosure illustrates an example method of event filtering in accordance with embodiments of the disclosure.

The example method of Figure 9B starts at step S9010 and proceeds to step S9012.

In step S9012, the method comprises storing event timestamp and polarity of events received from an event-based image sensor.

In step S9014, the method comprises implementing a processing layer to control the event lifespan, helping spatial correlations and requiring memory for timestamp information.

In step S9016, the method comprises applying spatial correlation based on adjustable neighbours with varying weights in each neighbourhood, contributing to the reduction of high-frequency components in each pixel.

In step S9018, the method comprises executing an accumulation step that combines the weighted neighbours in a unique potential for each incoming event. This is supported by the neighbourhood, with the previous potential acting as a refractory period to preserve spatiotemporal components.

Step S9020 comprises introducing a threshold parameter to control the filter output given the accumulation of event potential (and decide whether to pass a current event). As this potential depends on factors such as event speed, this threshold can adapt dynamically to the prevailing scene conditions.

In step 9022, the method comprises incorporating a threshold generator with a global overview of the scene to dynamically fine-tune (or adapt) filter parameter and event activity output.

The method proceeds to and ends with step S9024.

The example method of Figure 9B is one example implementation of a method of event filtering in accordance with the present disclosure. The present disclosure is not particularly limited to this example method.

Hence, more generally, a method of event filtering for an event based imaging sensor is provided, comprising: receiving an indication of a pixel position associated with a current event detected by the event based imaging sensor; determining an event potential associated with the current event; and determining whether to pass the current event based on the event potential; wherein the method comprises determining the event potential for the current event based on combining contributions associated with pixels in a local region of pixels around the pixel position of the current event, where a given contribution associated with a given pixel in the local region is dependent on a time decay factor which causes the given contribution to decrease with increasing time difference between a time of detection of a previous event for the given pixel and a time of detection of the current event.

<Computer Program>

Furthermore, it will be appreciated that the methods of the present disclosure may be carried out on hardware suitably adapted as applicable by software instruction or by the inclusion or substitution of dedicated hardware. Thus, the required adaptation to existing parts of a conventional equivalent device may be implemented in the form of a computer program product comprising processor implementable instructions stored on a non-transitory machine-readable medium such as a floppy disk, optical disk, hard disk, PROM, RAM, flash memory or any combination of these or other storage media, or realized in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

<Example Hardware Implementation>

The event filter of embodiments of the disclosure may be implemented by hardware. Indeed, the event filter of the present disclosure is oriented towards reconfigurable hardware implementation with arithmetic approximations allowed by the nature of the noise.

Filters operate on the probabilities of events being either signal or noise, so they have intrinsic tolerance for inaccuracies. The possibility of errors is an integral part of the processing, and relaxing precision in operations can potentially yield significant gains in operating frequency.

The current focus of filters has been on minimizing operations to achieve latency close to the event rate from the DVS sensor, without considering paradigms such as approximate computing. Applying this approach allows the computing system to statistically approximate, considering the inherent nature of noise. This flexibility in operations requires fewer resources, consumes less power, and offers low latency.

Inspired by the biological mechanisms of DVS sensors, a hardware implementation (such as that illustrated in Figure 10 of the present disclosure) can mirror biological mechanisms like imprecision tolerance. This emulates human perceptual behavior, where individuals have the ability to ignore high-frequency patterns, fill in missing information, and process data despite noisy environments, for example.

Indeed, given that the filter is not critically dependent on exact results, adder units do not require carry chains, thereby reducing resources and path delays. Implementations based on approximate computing are feasible in this design, allowing for a reduction in computing units and, consequently, power consumption. As approximate computing may be sufficient, it will be appreciated that, while the equations above give a guide to a possible filter implementation, exact compliance with these equations is not essential, and another function for computing event potential could also be used (e.g. a function which approximates these equations).

An example hardware architecture implementation is illustrated in Figure 10 of the present disclosure. That is, Figure 10 illustrates filter blocks for a hardware implementation of the event filter in accordance with embodiments of the disclosure.

The example of Figure 10 is one example hardware implementation of an event filter in accordance with embodiments of the disclosure. However, the present disclosure is not particularly limited in this regard and other arrangements or implementations of the event filter can be used in accordance with embodiments of the disclosure.

In this example of Figure 10, an event, evt, is received at the input from an event-based image sensor. A timestamp memory layer is provided, which has a timestamp memory storing the timestamp of the most recently occurring event for each pixel. The time stamp memories of Figure 10 are an example of the timestamp memory 4010 of Figure 4.

The event, evt, is then passed to a corresponding timestamp memory and used to update the timestamp of the most recent event stored therein.

A signal path from the timestamp memories then passes the timestamp of the most recent event, ts_ht_evt, to a decay layer, where a time decay factor is applied, which causes the given contribution to decrease with increasing time difference between a time of detection of a previous event for the given pixel and a time of detection of the current event. Indeed, timestamps are read out of the timestamp memory (and a time decay factor is applied) for each pixel in a local region around the position of interest (namely, the position of the current event). Accordingly, the decay layer of Figure 10 is an example of the the event life 4002 of Figure 4.

The values from the decay layer are passed to an multiplier which then multiplies these values with a weighting (neighbourhood weight matrix) which weights the pixels in a local region surrounding the current event such that the pixels in the local region provide a different contribution to the event potential for the current event depending on their proximity to the current event. This is an example of the neighbourhood weight accumulation 4006 of Figure 4.

A potential memory is provided, which stores the most recent potential for a given pixel. The value in the potential memory is updated with each cycle based on a second time decay factor such that event potential associated with an event detected by the event based imaging sensor will decrease with increasing time difference between a time of detection of the event associated with that event potential and a current time. The event potential, for a given pixel, is also updated when a new event is detected for that pixel. The potential memory is an example of the potential memory 4012 of the example of Figure 4.

These values (i.e. the weighted contribution from the pixels in the local region and the time-decayed potential values) are then combined by an accumulator in order to determine the event potential for the current event. This is an example of the event potential determination of Equation 4 of the disclosure.

A threshold controller is also provided in the example of Figure 10. The threshold controller receives input from the decay layer and uses this information to set a parameters of the filter (including a threshold value used by a comparator (discussed below) to determine whether or not the event is valid. This is an example of the threshold generator 4016 of Figure 4.

Furthermore, in this example, a comparator is provided which is used to compare the event potential which has been calculated for the current event against a threshold value from the threshold controller in order to determine whether or not the event is valid. A valid event, to be passed by the filter, is an event whose potential exceeds the threshold value currently set by the threshold controller. A multiplexer is then used to select whether or not to pass the event depending on the output from the comparator. Accordingly, the comparator and multiplexer are an example of the event activity control 4006 of Figure 4.

<Example System>

Furthermore, an imaging system may be provided in accordance with embodiments of the disclosure.

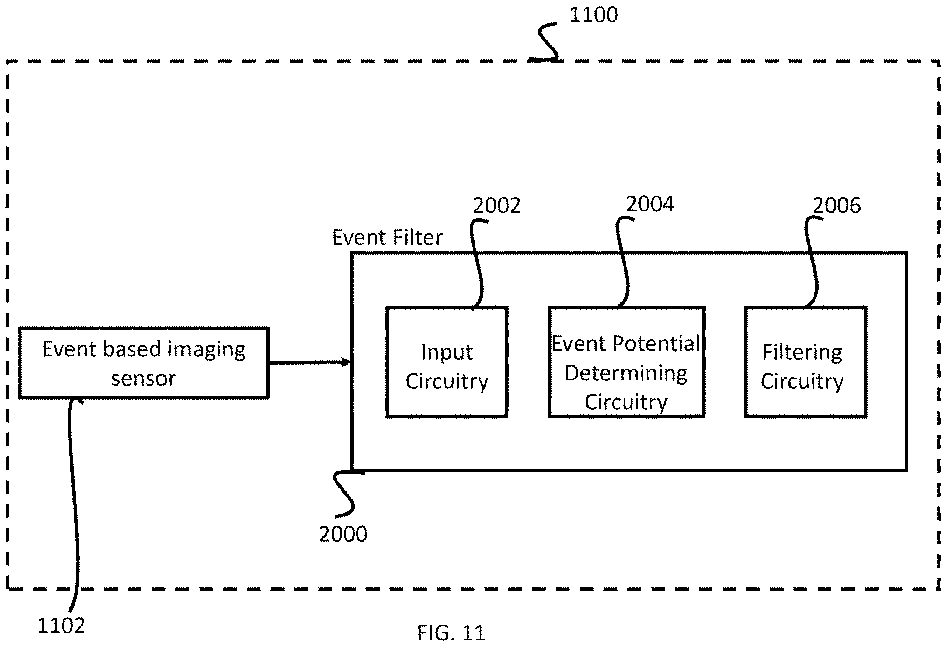

Figure 11 illustrates an example imaging system in accordance with embodiments of the disclosure.

While an example imaging system has been illustrated with reference to Figure 11, it will be appreciated that the present disclosure is not particularly limited in this regard. For example, the imaging system illustrated in Figure 11 of the present disclosure comprises only an event-based image sensor and an event filter. However, one or more additional elements may also be provided within an imaging system in accordance with embodiments of the present disclosure.

As an example, an imaging system according to embodiments of the disclosure may further include image processing circuitry to process events which have been passed by the event filter, storage circuitry configured to store events passed by the event circuitry and/or images generated by the image processing circuitry, communication circuitry configured to transmit data from the imaging system to one or more other devices (e.g. transmitting data from the imaging system over a communication network) and/or a display device to display data generated by the image processing circuitry.

Accordingly, while only an event-based image sensor and an event filter are shown in the example system of Figure 11 of the present disclosure, it will be appreciated that any number of additional elements may also be provided within this imaging system depending on the situation to which the embodiments of the disclosure are applied. For example, events passed by the event filter may be processed by downstream circuitry.

Furthermore, it will be appreciated that numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An event filter (2000) for an event based imaging sensor (1102), comprising:

   input circuitry (2002) configured to receive an indication of a pixel position associated with a current event detected by the event based imaging sensor;
   event potential determining circuitry (2004) configured to determine an event potential associated with the current event; and
   filtering circuitry (2006) configured to determine whether to pass the current event based on the event potential;
   wherein the event potential determining circuitry (2004) is configured to determine the event potential for the current event based on combining contributions associated with pixels in a local region of pixels around the pixel position of the current event, where a given contribution associated with a given pixel in the local region is dependent on a time decay factor which causes the given contribution to decrease with increasing time difference between a time of detection of a previous event for the given pixel and a time of detection of the current event; and wherein the given contribution is dependent on a factor corresponding to a previous event potential associated with the given pixel and the factor corresponding to the previous event potential depends on a second time decay factor which causes the previous event potential to decrease with increasing time difference between a time of detection of the previous event associated with the previous event potential and the time of detection of the current event.

2. The event filter according to any of claim 1, wherein the event filter comprises event potential storage circuitry configured to store an event potential which has been determined for an event detected by the event based imaging sensor in association with a pixel position.

3. The event filter according to claim 2, wherein the event potential determining circuitry is configured to update event potentials stored in the event potential storage circuitry based on a second time decay factor which causes event potential associated with an event detected by the event based imaging sensor to decrease with increasing time difference between a time of detection of the event associated with that event potential and a current time.

4. The event filter according to claim 2 or 3, wherein the event potential determining circuitry is configured to update the event potential stored in the event potential storage circuitry in association with a pixel position when a new event associated with that pixel position is detected by the event based imaging sensor.

5. The event filter according to any of claims 1 to 4, wherein the event potential determining circuitry is configured to weight a given contribution associated with a given pixel in the local region based on a distance between a pixel position of the given pixel and the pixel position associated with the current event.

6. The event filter according to claim 5, wherein the event potential determining circuitry is configured to weight the given contribution associated with the given pixel with decreasing weight for increasing distance between the pixel position of the given pixel and the pixel position associated with the current event.

7. The event filter according to claims 1 to 6, wherein the filtering circuitry is configured to determine whether to pass the current event based on a comparison of the event potential with a threshold value.

8. The event filter according to any of claims 1 to 7, wherein the filtering circuitry is configured to adapt a filtering parameter based on at least one of an optical flow metric and a rate of events which have been passed by the filtering circuitry.

9. The event filter according to any of claims 1 to 8, wherein one or more of the circuits of the event filter are approximate computing circuits.

10. The event filter according to claim 1, wherein the given contribution for a given pixel is based on a distance-dependent weighting factor and a previous potential associated with that given pixel regulated by a time-dependent decay, and the event potential is determined by summating the given contribution for pixels across the local region.

11. A system (1100) comprising an event based imaging sensor (1102) and the event filter (2000) according to any of claims 1 to 10.

12. A method of event filtering for an event based imaging sensor (1102), comprising:

   receiving an indication of a pixel position associated with a current event (S9002) detected by the event based imaging sensor;
   determining an event potential associated with the current event (S9004); and
   determining whether to pass the current event based on the event potential (S9006);
   wherein the method comprises determining the event potential for the current event based on combining contributions associated with pixels in a local region of pixels around the pixel position of the current event, where a given contribution associated with a given pixel in the local region is dependent on a time decay factor which causes the given contribution to decrease with increasing time difference between a time of detection of a previous event for the given pixel and a time of detection of the current event;
   and wherein the given contribution is dependent on a factor corresponding to a previous event potential associated with the given pixel and the factor corresponding to the previous event potential depends on a second time decay factor which causes the previous event potential to decrease with increasing time difference between a time of detection of the previous event associated with the previous event potential and the time of detection of the current event.

13. A computer program comprising instructions which, when implemented by a computer, cause the computer to perform a method according to claim 12.

**Patentansprüche**

1. Ereignisfilter (2000) für einen ereignisbasierten Bildgebungssensor (1102), Folgendes umfassend:

   eine Eingangsschaltung (2002), die dazu konfiguriert ist, eine Angabe einer Pixelposition zu empfangen, die einem gegenwärtigen Ereignis zugeordnet ist, das durch den ereignisbasierten Bildgebungssensor erkannt wird;

eine Schaltung (2004) zum Bestimmen von Ereignispotenzial, die dazu konfiguriert ist, ein Ereignispotenzial zu bestimmen, das dem gegenwärtigen Ereignis zugeordnet ist; und

eine Filterschaltung (2006), die dazu konfiguriert ist, basierend auf dem Ereignispotenzial zu bestimmen, ob das gegenwärtige Ereignis den Filter passieren darf;

wobei die Schaltung (2004) zum Bestimmen des Ereignispotenzials dazu konfiguriert ist, das Ereignispotenzial für das gegenwärtige Ereignis basierend auf dem Kombinieren von Beiträgen zu bestimmen, die Pixeln in einer lokalen Region von Pixeln rings um die Pixelposition des gegenwärtigen Ereignisses zugeordnet sind, wobei ein gegebener Beitrag, der einem gegebenen Pixel in der lokalen Region zugeordnet ist, von einem Abklingzeitfaktor abhängt, der bewirkt, dass der gegebene Beitrag mit zunehmender Zeitdifferenz zwischen einem Zeitpunkt der Erkennung eines vorherigen Ereignisses für das gegebene Pixel und einem Zeitpunkt der Erkennung des gegenwärtigen Ereignisses abnimmt;

und wobei der gegebene Beitrag von einem Faktor abhängt, der einem vorherigen Ereignispotenzial entspricht, das dem gegebenen Pixel zugeordnet ist, und der Faktor, der dem vorherigen Ereignispotenzial entspricht, von einem zweiten Abklingzeitfaktor abhängt, der bewirkt, dass das vorherige Ereignispotenzial mit zunehmender Zeitdifferenz zwischen einem Zeitpunkt der Erkennung des vorherigen Ereignisses, das dem Potenzial des vorherigen Ereignisses zugeordnet ist, und dem Zeitpunkt der Erkennung des gegenwärtigen Ereignisses abnimmt.

2. Ereignisfilter nach einem von Anspruch 1, wobei der Ereignisfilter eine Schaltung zum Speichern von Ereignispotenzial umfasst, die dazu konfiguriert ist, ein Ereignispotenzial, das für ein Ereignis bestimmt wurde, das durch den ereignisbasierten Bildgebungssensor erkannt wird, in Zuordnung zu einer Pixelposition zu speichern.

3. Ereignisfilter nach Anspruch 2, wobei die Schaltung zum Speichern von Ereignispotenzial dazu konfiguriert ist, Ereignispotenziale, die in der Schaltung zum Speichern von Ereignispotenzial gespeichert sind, basierend auf einem zweiten Abklingzeitfaktor zu aktualisieren, der bewirkt, dass das Ereignispotenzial, das einem Ereignis zugeordnet ist, das durch den ereignisbasierten Bildgebungssensor erkannt wird, mit zunehmender Zeitdifferenz zwischen einem Zeitpunkt der Erkennung des Ereignisses, das dem Ereignispotenzial zugeordnet ist, und einem gegenwärtigen Zeitpunkt abnimmt.

4. Ereignisfilter nach Anspruch 2 oder 3, wobei die Schaltung zum Bestimmen von Ereignispotenzial dazu konfiguriert ist, das Ereignispotenzial, das in der Schaltung zum Speichern von Ereignispotenzial in Verbindung mit einer Pixelposition gespeichert ist, zu aktualisieren, wenn durch den ereignisbasierten Bildgebungssensor ein neues Ereignis erkannt wird, das dieser Pixelposition zugeordnet ist.

5. Ereignisfilter nach einem der Ansprüche 1 bis 4, wobei die Schaltung zum Bestimmen von Ereignispotenzial dazu konfiguriert ist, einen gegebenen Beitrag, der einem gegebenen Pixel in der lokalen Region zugeordnet ist, basierend auf einer Distanz zwischen einer Pixelposition des gegebenen Pixels und der Pixelposition, die dem gegenwärtigen Ereignis zugeordnet ist, zu gewichten.

6. Ereignisfilter nach Anspruch 5, wobei die Schaltung zum Bestimmen von Ereignispotenzial dazu konfiguriert ist, den gegebenen Beitrag, der dem gegebenen Pixel zugeordnet ist, mit abnehmender Gewichtung für eine zunehmende Distanz zwischen der Pixelposition des gegebenen Pixels und der Pixelposition, die dem gegenwärtigen Ereignis zugeordnet ist, zu gewichten.

7. Ereignisfilter nach einem der Ansprüche 1 bis 6, wobei die Filterschaltung dazu konfiguriert ist, basierend auf einem Vergleich des Ereignispotenzials mit einem Schwellenwert zu bestimmen, ob das gegenwärtige Ereignis den Filter passieren darf.

8. Ereignisfilter nach einem der Ansprüche 1 bis 7, wobei die Filterschaltung dazu konfiguriert ist, einen Filterungsparameter basierend auf mindestens einem von einer Metrik eines optischen Flusses und einer Rate von Ereignissen, welche die Filterschaltung passieren durften, anzupassen.

9. Ereignisfilter nach einem der Ansprüche 1 bis 8, wobei eine oder mehrere der Schaltungen des Ereignisfilters Näherungsrechenschaltungen sind.

10. Ereignisfilter nach Anspruch 1, wobei der gegebene Beitrag für ein gegebenes Pixel auf einem distanzabhängigen Gewichtungsfaktor und einem vorherigen Potential basiert, das diesem gegebenen Pixel zugeordnet ist, das durch ein zeitabhängiges Abklingen geregelt ist, und das Ereignispotential durch Addieren des gegebenen Beitrags für Pixel über die lokale Region hinweg bestimmt wird.

11. System (1100), einen ereignisbasierten Bildgebungssensor (1102) und den Ereignisfilter (2000) nach einem der Ansprüche 1 bis 10 umfassend.

12. Verfahren zum Ereignisfiltern für einen ereignisbasierten Bildgebungssensor (1102), Folgendes umfassend:

Empfangen einer Angabe einer Pixelposition, die einem gegenwärtigen Ereignis zugeordnet ist (S9002), das durch den ereignisbasierten Bildgebungssensor erkannt wird;
Bestimmen eines Ereignispotenzials, das dem gegenwärtigen Ereignis zugeordnet ist (S9004); und
Bestimmen, ob das gegenwärtige Ereignis den Filter passieren darf, basierend auf dem Ereignispotenzial (S9006) ;
wobei das Verfahren das Bestimmen des Ereignispotenzials für das gegenwärtige Ereignis basierend auf dem Kombinieren von Beiträgen, die Pixeln in einer lokalen Region von Pixeln rings um die Pixelposition des gegenwärtigen Ereignisses zugeordnet sind, wobei ein gegebener Beitrag, der einem gegebenen Pixel in der lokalen Region zugeordnet ist, von einem Abklingzeitfaktor abhängt, der bewirkt, dass der gegebene Beitrag mit zunehmender Zeitdifferenz zwischen einem Zeitpunkt der Erkennung eines vorherigen Ereignisses für das gegebene Pixel und einem Zeitpunkt der Erkennung des gegenwärtigen Ereignisses abnimmt;
und wobei der gegebene Beitrag von einem Faktor abhängt, der einem vorherigen Ereignispotenzial entspricht, das dem gegebenen Pixel zugeordnet ist, und der Faktor, der dem vorherigen Ereignispotenzial entspricht, von einem zweiten Abklingzeitfaktor abhängt, der bewirkt, dass das vorherige Ereignispotenzial mit zunehmender Zeitdifferenz zwischen einem Zeitpunkt der Erkennung des vorherigen Ereignisses, das dem Potenzial des vorherigen Ereignisses zugeordnet ist, und dem Zeitpunkt der Erkennung des gegenwärtigen Ereignisses abnimmt.

13. Computerprogramm, Anweisungen umfassend, die bei Implementierung durch einen Computer den Computer veranlassen, ein Verfahren nach Anspruch 12 durchzuführen.

## Revendications

1. Filtre d'événements (2000) pour un capteur d'imagerie (1102) basé sur des événements, comprenant :

une circuiterie d'entrée (2002) configurée pour recevoir une indication d'une position de pixel associée à un événement courant détecté par le capteur d'imagerie basé sur des événements ;
une circuiterie de détermination de potentiel d'événement (2004) configurée pour déterminer un potentiel d'événement associé à l'événement courant ; et
une circuiterie de filtrage (2006) configurée pour déterminer s'il convient de laisser passer l'événement courant sur la base du potentiel d'événement ;
dans lequel la circuiterie de détermination de potentiel d'événement (2004) est configurée pour déterminer le potentiel d'événement pour l'événement courant sur la base d'une combinaison de contributions associées à des pixels dans une région locale de pixels autour de la position de pixel de l'événement courant, une contribution donnée associée à un pixel donné dans la région locale étant fonction d'un facteur de décroissance temporelle qui entraîne une diminution de la contribution donnée avec un écart de temps croissant entre un instant de détection d'un événement précédent pour le pixel donné et un instant de détection de l'évènement courant ;
et dans lequel la contribution donnée est fonction d'un facteur correspondant à un potentiel d'événement précédent associé au pixel donné, et le facteur correspondant au potentiel d'événement précédent dépend d'un deuxième facteur de décroissance temporelle qui entraîne une diminution du potentiel d'événement précédent avec un écart de temps croissant entre un instant de détection de l'événement précédent associé au potentiel d'événement précédent et l'instant de détection de l'événement courant.

2. Filtre d'événements selon la revendication 1, le filtre d'événements comprenant une circuiterie de stockage de potentiel d'événement configurée pour stocker un potentiel d'événement qui a été déterminé pour un événement détecté par le capteur d'imagerie basé sur des événements en association avec une position de pixel.

3. Filtre d'événements selon la revendication 2, dans lequel la circuiterie de détermination de potentiel d'événement est configurée pour mettre à jour des potentiels d'événement stockés dans la circuiterie de stockage de potentiel d'événement sur la base d'un deuxième facteur de décroissance temporelle qui entraîne une diminution du potentiel d'événement associé à un événement détecté par le capteur d'imagerie basé sur des événements avec un écart de temps croissant entre un instant de détection de l'événement associé à ce potentiel d'événement et un instant courant.

4. Filtre d'événements selon la revendication 2 ou 3, dans lequel la circuiterie de détermination de potentiel d'événement est configurée pour mettre à jour le potentiel d'événement stocké dans la circuiterie de stockage de potentiel d'événement en association avec une position de pixel lorsqu'un nouvel événement associé à cette position de pixel est détecté par le capteur d'imagerie basé sur des événements.

5. Filtre d'événements selon l'une quelconque des revendications 1 à 4, dans lequel la circuiterie de détermination de potentiel d'événement est configurée pour pondérer une contribution donnée associée à un pixel donné dans la région locale sur la base d'une distance entre une position de pixel du pixel donné et la position de pixel associée à l'événement courant.

6. Filtre d'événements selon la revendication 5, dans lequel la circuiterie de détermination de potentiel d'événement est configurée pour pondérer la contribution donnée associée au pixel donné avec un poids décroissant pour une distance croissante entre la position de pixel du pixel donné et la position de pixel associée à l'événement courant.

7. Filtre d'événements selon les revendications 1 à 6, dans lequel la circuiterie de filtrage est configurée pour déterminer s'il convient de laisser passer l'événement courant sur la base d'une comparaison du potentiel d'événement avec une valeur de seuil.

8. Filtre d'événements selon l'une quelconque des revendications 1 à 7, dans lequel la circuiterie de filtrage est configurée pour adapter un paramètre de filtrage sur la base d'une métrique de flux optique et/ou d'un taux d'événements que la circuiterie de filtrage a laissé passer.

9. Filtre d'événements selon l'une quelconque des revendications 1 à 8, dans lequel un ou plusieurs des circuits du filtre d'événements sont des circuits de calcul approximatif.

10. Filtre d'événements selon la revendication 1, dans lequel la contribution donnée pour un pixel donné est basée sur un facteur de pondération qui est fonction de la distance et un potentiel précédent associé à ce pixel donné régulé par une décroissance qui est fonction du temps, et le potentiel d'événement est déterminé par sommation de la contribution donnée pour des pixels à travers la région locale.

11. Système (1100) comprenant un capteur d'imagerie (1102) basé sur des événements et le filtre d'événements (2000) selon l'une quelconque des revendications 1 à 10.

12. Procédé de filtrage d'événements pour un capteur d'imagerie (1102) basé sur des événements, comprenant :

la réception d'une indication d'une position de pixel associée à un événement courant (S9002) détecté par le capteur d'imagerie basé sur des événements ;
la détermination d'un potentiel d'événement associé à l'événement courant (S9004) ; et
la détermination s'il convient de laisser passer l'événement courant sur la base du potentiel de l'événement (S9006) ;
le procédé comprenant la détermination du potentiel d'événement pour l'événement courant sur la base d'une combinaison de contributions associées à des pixels dans une région locale de pixels autour de la position de pixel de l'événement courant, une contribution donnée associée à un pixel donné dans la région locale étant fonction d'un facteur de décroissance temporelle qui entraîne une diminution de la contribution donnée avec un écart de temps croissant entre un instant de détection d'un événement précédent pour le pixel donné et un instant de détection de l'évènement courant ;
et dans lequel la contribution donnée est fonction d'un facteur correspondant à un potentiel d'événement précédent associé au pixel donné, et le facteur correspondant au potentiel d'événement précédent dépend d'un deuxième facteur de décroissance temporelle qui entraîne une diminution du potentiel d'événement précédent avec un écart de temps croissant entre un instant de détection de l'événement précédent associé au potentiel d'événement précédent et l'instant de détection de l'événement courant.

13. Programme d'ordinateur comprenant des instructions qui, lorsqu'elles sont mises en œuvre par un ordinateur, amènent l'ordinateur à réaliser un procédé selon la revendication 12.

FIG. 1

FIG. 2

FIG. 3

FIG. 4

| | | | | |
|---|---|---|---|---|
| 1ω | 1ω | 1ω | 1ω | 1ω |
| 1ω | 2ω | 2ω | 2ω | 1ω |
| 1ω | 2ω | 3ω | 2ω | 1ω |
| 1ω | 2ω | 2ω | 2ω | 1ω |
| 1ω | 1ω | 1ω | 1ω | 1ω |

FIG. 5

FIG. 6

FIG. 7

FIG. 8A

FIG. 8B

Start ⟿ S9000

Receiving indication associated with current event ⟿ S9002

Determining current event potential ⟿ S9004

Determining whether to pass current event ⟿ S9006

End ⟿ S9008

FIG. 9A

Start — S9010

Store event timestamp and polarity — S9012

Control event lifespan — S9014

Apply spatial correlations — S9016

Calculate event potential — S9018

Determining whether to pass current event — S9020

Dynamically adapt parameters — S9022

End — S9024

FIG. 9B

FIG. 10

EP 4 472 226 B1

**1100**

Event Filter

**2002**

**2004**

**2006**

Event based imaging sensor

Input Circuitry

Event Potential Determining Circuitry

Filtering Circuitry

**2000**

**1102**

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- An Efficient Space Spatiotemporal Noise Filter For Dynamic Vision Sensor. **FENG BOHAN et al.** 2021 IEEE 14th International Conference on ASIC (ASICON). IEE, 26 October 2021, 1-4
- Event-based human intrusion detection in UAS using Deep Learning. **PEREZ-CUTINO M A et al.** 2021 International Conference on unmanned aircraft systems (ICUAS). IEEE, 15 June 2021, 91-100
- A Less Noisy Time Surface for Event-based Visual Odometry. **HU RUI et al.** 2021 IEEE International Conference on unmanned systems (ICUS). IEEE, 15 October 2021, 299-304
- Frame-free dynamic digital vision. **T. DELBRUCK et al.** Proceedings of Intl. Symp. On Secure-Life Electronics, Advanced Electronics for Quality Life and Society. Citeseer, 2008, vol. 1, 21-26
- **A. KHODAMORADI** ; **R. KASTNER**. o(n) o(n)-space spatiotemporal filter for reducing noise in neuromorphic vision sensors. *IEEE Transactions on Emerging Topics in Computing*, 2018, vol. 9 (1), 15-23
- **V. PADALA** ; **A. BASU** ; **G. ORCHARD**. A noise filtering algorithm for event-based asynchronous change detection image sensors on truenorth and its implementation on truenorth. *Frontiers in neuroscience,*, 2018, vol. 12, 118